# EUROPEAN PATENT SPECIFICATION

(11) **EP 2 736 977 B1**
(45) Date of publication and mention of the grant of the patent: **20.05.2015**
(21) Application number: 12751639.1
(22) Date of filing: 26.07.2012
(51) Int. Cl.: C08L 91/06, E04F 15/20, G10K 11/16

(54) **SOUND-REDUCING TONGUE AND GROOVE MEMBER, SOUND-REDUCING FABRICATION PROCESS, AND SOUND-REDUCING BLEND**
GERÄUSCHGEDÄMMTE NUT UND FEDER ELEMENTE, VERFAHREN ZU DEREN HERSTELLUNG UND GERÄUSCHDÄMMENDE MISCHUNG
ÉLÉMENT DE LANGUETTE ET DE RAINURE D'ISOLEMENT ACOUSTIQUE, PROCÉDÉ DE FABRICATION D'ISOLEMENT ACOUSTIQUE ET SON MÉLANGE

(30) Priority: 27.07.2011 US 201113191539
(43) Date of publication of application: 04.06.2014
(73) Proprietor: Armstrong World Industries, Inc., Lancaster, PA 17604-3001 (US)
(72) Inventor: RAMACHANDRA, Sunil, Lancaster, PA 17601 (US); QUISENBERRY, Keith, T., Hilliard, OH 43026 (US); PASTRANA, Tony, T., Millersville, PA 17551 (US)
(74) Representative: Jenkins, Peter David
(86) International application number: PCT/US2012/048281
(87) International publication number: WO 2013/016504

(56) References cited:
- EP-A2- 1 209 301
- WO-A1-2005/044555
- DE-U1-202006 001 975
- US-A- 4 002 706
- US-A1- 2003 091 949

## Description

### FIELD OF THE INVENTION

The present invention relates to tongue and groove products, blends for tongue and groove products, and processes of fabricating tongue and groove products. More specifically, the present invention relates to sound reduction of such products and processes.

### BACKGROUND OF THE INVENTION

Tongue and groove products, such as tongue and groove flooring, are used in various facilities where quick assembly is desired and/or where lateral stability is desired. These products include features for engaging individual members that form an assembly of the products. The features can include male parts or tongues and/or female parts or grooves. Tongue and groove products engage each other along such features.

Known tongue and groove products suffer from a drawback that they can be noisy when walked upon. When tongue and groove floors are walked on, force is applied downward and/or in a lateral direction. Such forces distribute in numerous directions due to the mating features of the tongue and groove flooring. Such complex mating features result in these forces generating noises. Such noises are especially loud and frequent when installed at inconsistent temperatures and/or at temperatures of less than 15°C(60°F). Known products with waxes positioned on horizontal surfaces in regions that generate noises have failed to reduce such noises. To the contrary, known waxes have been positioned in regions that generate noises and/or have compositions that fail to reduce noises.

WO-A-2005/044555 discloses a sound dampening laminate. US-A-2003/0091949 discloses a vegetable oil candle with a paraffin wax mixture.

A tongue and groove member or assembly, a fabrication process, and a blend that do not suffer from one or more of the above drawbacks would be desirable in the art.

### BRIEF DESCRIPTION OF THE INVENTION

The present invention provides a sound reducing blend according to claim 1, claim 11 or claim 12 and a sound -reducing tongue and groove member according to claim 15. Optional features are defined in the dependent claims.

According to an embodiment, a sound-reducing tongue and groove member includes a treatment region within the member and a sound-reducing blend positioned at a location within the treatment region. The sound-reducing blend being positioned at the location provides sound mitigation.

According to another embodiment, a sound-reducing fabrication process includes applying a sound-reducing blend to a location within a treatment region within a member. The sound-reducing blend being positioned at the location provides sound mitigation.

According to another embodiment, a sound-reducing blend provides sound mitigation when applied to a location within a treatment region within a member.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 illustrates an exemplary tongue and groove flooring member having an engagement protrusion according to the disclosure.
FIG. 2 illustrates an exemplary tongue and groove flooring member having an engagement recess corresponding to the flooring member of FIG. 1 according to the disclosure.
FIG. 3 illustrates an exemplary tongue and groove flooring member having an engagement protrusion and an engagement recess according to the disclosure.
FIG. 4 illustrates an exemplary tongue and groove flooring member having an engagement protrusion and an engagement recess corresponding to the flooring member of FIG. 3 according to the disclosure.
FIG. 5 illustrates an exemplary tongue and groove flooring member having an engagement protrusion and an engagement recess according to the disclosure.
FIG. 6 illustrates an exemplary tongue and groove flooring member having an engagement protrusion and an engagement recess corresponding to the flooring member of FIG. 5 according to the disclosure.

Wherever possible, the same reference numbers will be used throughout the drawings to represent the same parts.

### DETAILED DESCRIPTION OF THE INVENTION

Provided is a sound-reducing tongue and groove member or assembly, a sound-reducing fabrication process, and a sound-reducing blend. Embodiments of the present disclosure reduce or eliminate noises generated from walking on a walking surface, include a desirable hardness, include desirable lubricity, include a desired lack of tackiness, include desirable wear resistance, include desirable resistance to flaking, and combinations thereof.

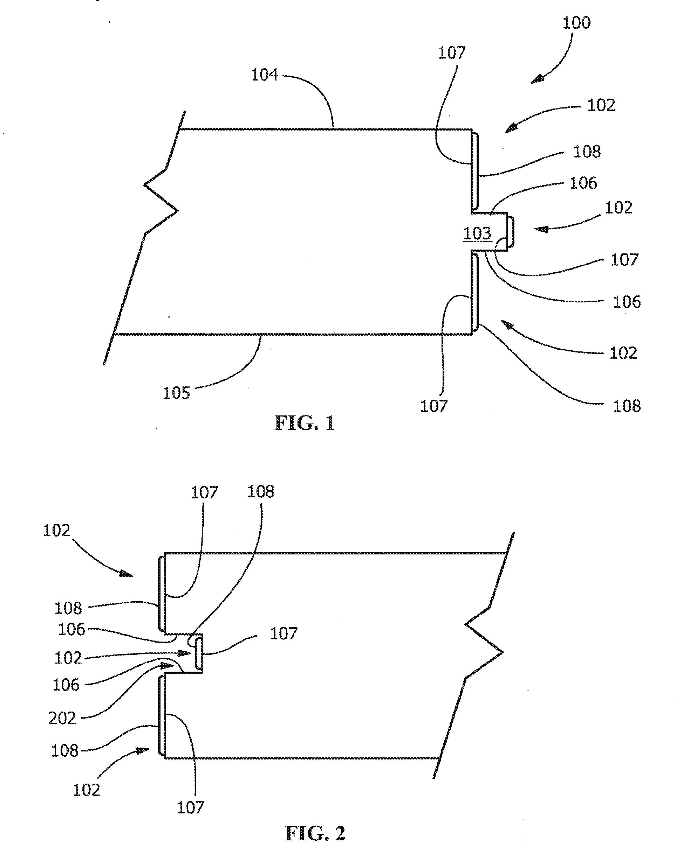

Referring to FIG. 1, a sound-reducing tongue and groove member 100 includes a treatment region 102 extending from an outer surface 104, such as a walking surface, a covered outer surface, an uncovered outer surface, a finished outer surface, and/or an unfinished outer surface of the member 100. Additionally or alternatively, in one embodiment, the treatment region 102 extends from a lower surface 105 of the member 100, is positioned on an engagement protrusion 103, is positioned in an engagement recess 202 (see FIG. 2), or combinations thereof.

The member 100 further includes a sound-reducing blend 108 positioned on one or more locations 107 within the treatment region 102. The positioning of the sound-reducing blend 108 provides sound mitigation, which may reduce or eliminate noise generated from walking on the outer surface 104, which may reduce or eliminate noise generated from expansion and contraction of the member 100, which may reduce or eliminate noise generated from other forces applied to the member 100, or combinations thereof.

In one embodiment, the sound mitigation reduces or eliminates noise even when the member 100 is installed at inconsistent temperatures and/or at a predetermined temperature or temperature range, for example, at about 21°C (70°F), at about 15°C (60°F), at about 10°C (50°F), between about 10°C (50°F) and about 21 °C (70°F), between about 10°C (50°F) and about 15°C (60°F), between about 15°C (60°F) and about 21°C (70°F), less than about 21°C (70°F), less than about 15°C (60°F), less than about 10°C (50°F), less than about 4°C (40°F), less than about 2°C (35°F), or any combination or sub-combination thereof. In a further embodiment, the sound mitigation reduces or eliminates noise even when the member 100 is used in conditions at a higher temperature, for example, at about 15°C (60°F), at about 21°C (70°F), at about 27°C (80°F), at about 32°C (90°F), at about 38°C (100°F), between about 15°C (60°F) and about 38°C (100°F), between about 21°C (70°F) and about 32°C (90°F), between about 21°C (70°F) and about 27°C (80°F), greater than about 15°C (60°F), greater than about 21°C (70°F), greater than about 27°C (80°F), or any combination or sub-combination thereof.

The member 100 is any suitable material, including, but not limited to, wood, wood composite, vinyl, polymeric material, stone, ceramics, metal, or a combination thereof. Suitable woods include, but are not limited to, birch, poplar, oak, pine, maple, hardwoods, softwoods, treated wood species, untreated wood species, and combinations thereof. Suitable wood composites include, but are not limited to, medium density fiberboard, high density fiberboard, low density fiberboard, filled polymer composites, wood plastic composites, veneers over different woods or over non-wood or partially wood materials, and recycled or blended materials having cellulosic components. Suitable vinyl compositions include, but are not limited to, polyvinylchloride, luxury vinyl tile, vinyl compositions of vinyl composition tile, and vinyl compositions of vinyl asbestos tile. Suitable polymeric materials include, but are not limited to, poly plastic asphalt tile. Suitable stone materials include, but are not limited to, granite, marble, concrete, and cement. Suitable ceramic materials include, but are not limited to, fired-ceramics. Suitable metal materials include, but are not limited to, steel, aluminum, iron, copper, alloys, and superalloys.

The member 100 is any suitable product or portion of a product that is subject to the generation of noise through forces being applied to the outer surface 104 and/or through expansion and contraction of the member 100. In one embodiment, the product is a wood flooring assembly including a plurality of the members 100 engaged to each other. In general, suitable tongue and groove products include, but are not limited to, flooring, sub-flooring, structural floors, exposed floors, cabinets, drawers, ceilings, walls, cubicles, walkways, pavers, roads, bridges, decks, patios, homes, mobile homes, recreational vehicles, boats, airplanes, automobiles, trims, molding, transitions trips, and trucks and truck trailers. The member 100 is capable of being positioned within the product, outside or on the exterior of the product, and/or under other products and/or surfaces. The member 100 has a predetermined thickness or thickness range, for example, between about 6mm (0.25 inches) and about 25mm (1inch), between about 7mm (0.30 inches) and about 17mm (0.65 inches), between about 7mm (0.30 inches) and about 12mm (0.50 inches), between about 9mm (0.35 inches) and about 10mm (0.40 inches), above about 2.5mm (0.1 inches), between about 2.5mm (0.1 inches) and about 5mm (0.2 inches), between about 2.5mm (0.1 inches) and about 25mm (1 inch), or any combination or sub-combination thereof.

In an embodiment where the member 100 is a composite, the member 100 includes a substantially homogenous composition, such that interior portions of the member 100 and exterior portions of the member 100 include substantially the same composition. Exterior portions are capable of including coatings, surface treatments, or other suitable materials. In a further embodiment, the member 100 is devoid of embedded waxes and/or similar additives.

The member 100 includes a predetermined geometry permitting engagement of a second member 100 that is identical in geometry to the member 100 or corresponds in geometry to the member 100. For example, referring to FIGS. 1 and 2, in one assembly, each of the members 100 includes two contact surfaces 106 extending, for example, in a substantially horizontal direction substantially parallel to the outer surface 104. In one embodiment, one or more of the contact surfaces 106 are devoid of the sound-reducing blend 108 and/or other waxes. The contact surfaces 106 extend from each of the treatment regions 102 and form the engagement protrusion 103 (see FIG. 1), such as a tongue, or the engagement recess 202 (see FIG. 2), such as a groove. Alternatively, only one of the contact surfaces 106 extends from the treatment region(s) 102, three of the contact surfaces 106 extend from the treatment region(s) 102, or more than three of the contact surfaces 106 extend from the treatment region(s) 102. In embodiments with more than four contact surfaces 106, all four of the contact surfaces 106, fewer than four of the contact surfaces 106, or more than four of the contact surfaces 106, extend from the treatment region(s) 102.

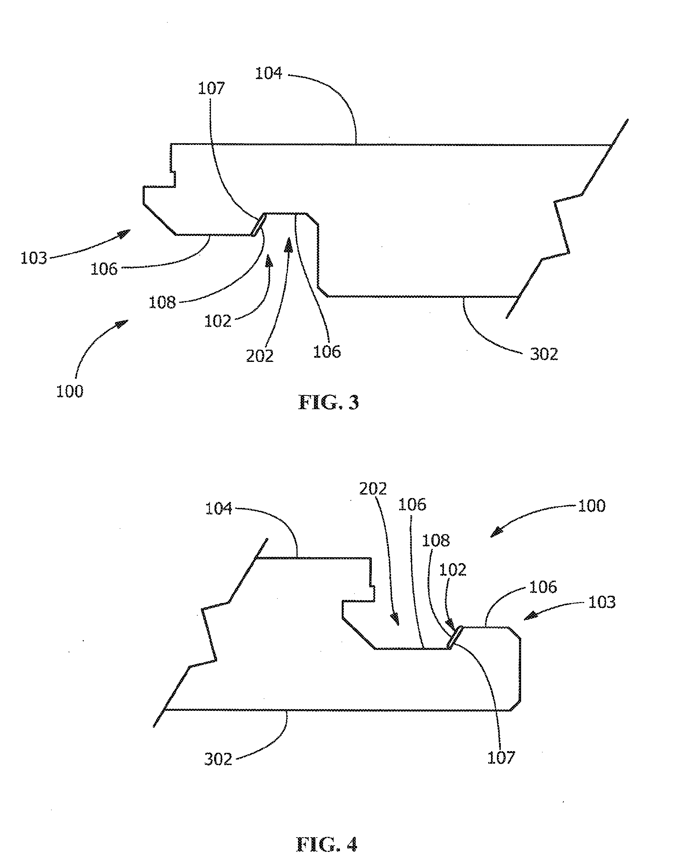

Referring to FIGS. 3 and 4, in one assembly, each of the members 100 includes two of the contact surfaces 106 extending, for example, in the substantially horizontal direction substantially parallel to the bottom surface 302. On each of the members 100, one of the contact surfaces 106 extends from the treatment region 102 and forms the engagement protrusion 103 and one of the contact surfaces 106 extends from the treatment region 102 and forms the engagement recess 202.

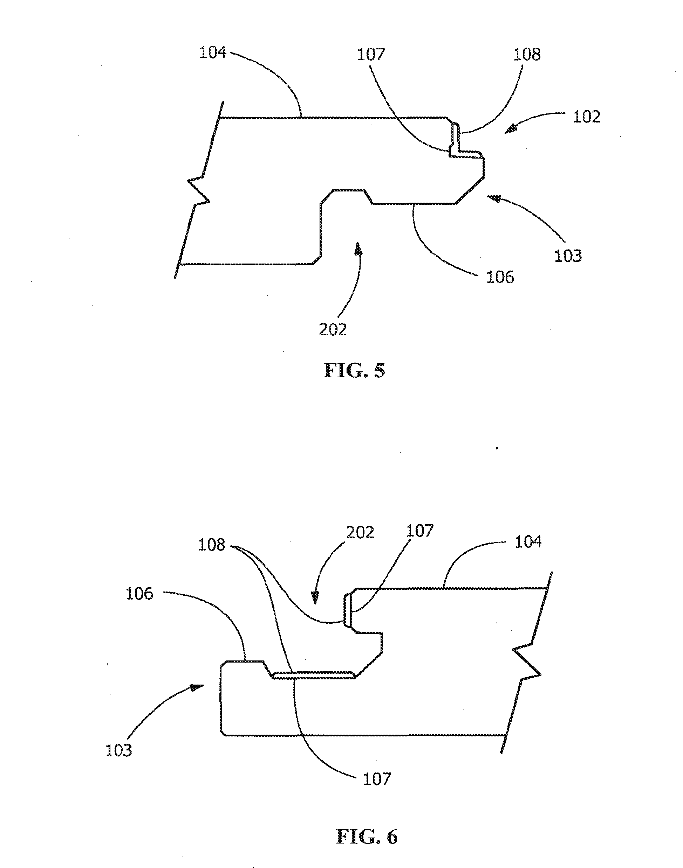

Referring to FIGS. 5 and 6, in one embodiment, each of the members 100 includes one of the contact surfaces 106 extending, for example, in the substantially horizontal direction substantially parallel to the outer surface 104. Referring to FIG. 5, in one embodiment, the contact surface 106 is apart from the treatment region 102 and is between the engagement recess 202 and the engagement protrusion 103. Referring to FIG. 6, in one embodiment, the contact surface 106 extends from the treatment region 102 and forms a portion of the engagement protrusion 103.

According to an embodiment of the sound-reducing fabrication process, the sound-reducing blend 108 is applied to the location(s) 107 within the treatment region 102 of the member 100. In further embodiments, the treatment region 102 includes the sound-reducing blend 108 and extends in or only in the substantially vertical direction with respect to the outer surface 104 (see FIGS. 1, 2, 5, and 6), extends at or only at an inclined direction with respect to the outer surface 104 (see FIGS. 3 and 4), or extends in or only in both the substantially vertical direction and the substantially horizontal direction with respect to the outer surface 104 (see FIG. 5 and 6).

In general, although not intending to be bound by theory, noise generated by the member 100 is believed to be caused by vertical movement occurring between the members 100 forming the assembly, such as a floor. The vertical movement is based upon force applied from the outer surface 104, for example, by an individual walking on the floor. The force from walking is in a diagonal direction (in relation to gravity) and can be broken into a force vector having a horizontal component and a vertical component. The tongue-and-groove features permit slight movement between the members 100 while maintaining a generally stable assembly. The horizontal component of the force vector pushes and pulls the members causing such slight movements. The vertical component of the force vector causes the members 100 to frictionally rub, thereby generating the noise. The sound-reducing blend 108 lubricates and/or decreases the friction between the members 100, thereby reducing or eliminating the generation of noise.

The sound-reducing blend 108 provides sound mitigation when applied. In one embodiment, the sound-reducing blend 108 includes a soft wax (not shown) and a hard wax (not shown), for example, homogenously mixed, in solution, in suspension, or combinations thereof. For example, in one embodiment, the wax is a plant wax, an animal wax, a synthetic wax, a derivative thereof, or a combination thereof. In a further embodiment, the wax is an epicuticular wax, a candelilla wax, a retamo wax, a sugarcane wax, a carnauba wax, an ouricury wax, a hydrogenated and deodorized soybean oil or plant oils, a lanolin wax, a beeswax, a lignite wax, a paraffin wax, a polyethylene wax, a polypropylene wax, polytetrafluoroethylene wax, a derivative thereof, or a combination thereof. In one embodiment, the sound-reducing blend 108 includes hydrogenated soybean oil and/or a hydrogenated metathesis dimer. In one embodiment, the sound-reducing blend 108 is substantially devoid of or completely devoid of oil. In one embodiment, the sound-reducing blend 108 includes a paraffin. In one embodiment, the sound-reducing blend 108 includes or is a biobased material. In one embodiment, the sound-reducing blend 108 is solid at room temperature.

In one embodiment, the sound-reducing blend 108 includes, by weight, between about 50%, about 70%, or 100% of a soft and oily wax having a melting point of about 53°C to 56°C and a needle penetration of about 35 to about 45 dmm at 25°C.

In one embodiment, the sound-reducing blend 108 includes, by weight, between about 30%, about 50%, or 100% of a hard and slick-to-touch wax having a melting point of about 67°C to 71°C and a needle penetration of about 10.0 to about 20.0 dmm at 25°C.

### EXAMPLES

A series of trials were conducted with various application positions and compositions. The trials involved having an individual walk on a surface of the member 100 in a consistent manner. Evaluating individuals rated noises generated from the member 100 to determine the intensity of the noise generated on a scale of 1 to 4 (4 being the highest amount). The same individuals were used for each trial and the ratings between the evaluators were averaged. The individuals had been trained to ignore sounds generated from the shoes or ambient sounds so that they could focus on sound generated by the member 100.

In a control example, no treatment was applied to the member 100. In this control, the noise rating was about 1.5 when the outer surface 104 of the member 100 was walked on.

In a first example, a treatment was applied to a predetermined location. The treatment was a blend including, by weight, about 50% of the soft and oily wax having a melting point of about 53°C to 56°C and a needle penetration of about 35 to about 45 dmm at 25°C and about 50% of the hard and slick-to-touch wax having a melting point of about 67°C to 71°C and a needle penetration of about 10.0 to about 20.0 dmm at 25°C. In this example, the noise rating was between about 1.0 and about 1.5 when the outer surface 104 of the member 100 was walked on.

In a second example, a treatment was applied to the predetermined location. The treatment was a blend including, by weight, about 70% of the soft and oily wax having a melting point of about 53°C to 56°C and a needle penetration of about 35 to about 45 dmm at 25°C and about 30% of the hard and slick-to-touch wax having a melting point of about 67°C to 71°C and a needle penetration of about 10.0 to about 20.0 dmm at 25°C. In this example, the noise rating was about 1.0 when the outer surface 104 of the member 100 was walked on.

In a third example, a treatment was applied to the predetermined location. The treatment was a blend including, by weight, about 50% of the hard and slick-to-touch wax having a melting point of about 67°C to 71°C and a needle penetration of about 10.0 to about 20.0 dmm at 25°C and about 50% of a very hard and slick-to-touch wax having a melting point of about 82°C to 85°C and a needle penetration of about 2 dmm at 25°C. In this example, the noise rating was about 1.5 when the outer surface 104 of the member 100 was walked on.

In a fourth example, a treatment was applied to the predetermined location. The treatment was the soft and oily wax having a melting point of about 53°C to 56°C and a needle penetration of about 35 to about 45 dmm at 25°C. In this example, the noise rating was about 1.0 when the outer surface 104 of the member 100 was walked on.

In a fifth example, a treatment was applied to the predetermined location. The treatment was the hard and slick-to-touch wax having a melting point of about 67°C to 71°C and a needle penetration of about 10.0 to about 20.0 dmm at 25°C. In this example, the noise rating was about 1.0 when the outer surface 104 of the member 100 was walked on.

In a sixth example, a treatment was applied to the predetermined location. The treatment was the very hard and slick-to-touch wax having a melting point of about 82°C to 85°C and a needle penetration of about 2 dmm at 25°C. In this example, the noise rating was about 2.0 when the outer surface 104 of the member 100 was walked on.

In a seventh example, a treatment was applied to the predetermined location. The treatment was a soft and sticky wax having a melting point of about 74°C to 78°C and a needle penetration of about 25 to about 35 dmm at 25°C. In this example, the noise rating was between about 1.5 and about 3.0 when the outer surface 104 of the member 100 was walked on.

In an eighth example, a treatment of the soft and sticky wax having a melting point of about 74°C to 78°C and a needle penetration of about 25 to about 35 dmm at 25°C was applied to the contact surface 106 oriented in a horizontal direction with respect to the outer surface 104 in the engagement recess 202 (see FIGS. 3 and 4). In this example, the noise rating was at about 3.0 when the outer surface 104 of the member 100 was walked on.

In a ninth example, a treatment of the soft and sticky wax having a melting point of about 74°C to 78°C and a needle penetration of about 25 to about 35 dmm at 25°C was applied to a location within the treatment region 102 oriented in an inclined direction with respect to the outer surface 104 and bordering the engagement recess 202 (see FIGS. 3 and 4). In this example, the noise rating was at about 1.5 when the outer surface 104 of the member 100 was walked on.

While the invention has been described with reference to a preferred embodiment, it will be understood by those skilled in the art that various changes may be made and equivalents may be substituted for elements thereof without departing from the scope of the invention as defined in the claims.

## Claims

1. A sound-reducing blend, comprising:
a first wax; and
a second wax blended with the first wax;
wherein the first wax has a melting point between 53°C and 56°C and the second wax has a melting point between 67°C and 71°C .

2. The sound-reducing blend of claim 1, wherein the first wax includes a soft and oily wax.

3. The sound-reducing blend of claim 1, wherein the second wax includes a hard wax.

4. The sound-reducing blend of claim 1, wherein the sound-reducing blend is a solution, a mixture, a suspension, or a combination thereof.

5. The sound-reducing blend of claim 1, wherein the first wax includes a plant wax, an animal wax, an epicuticular wax, a synthetic wax, or a combination thereof, or wherein the first wax includes a plant oil, or wherein the first wax includes a paraffin, or wherein the first wax includes a biobased material, or wherein the first wax includes polytetrafluoroethylene, or wherein the first wax further includes candelilla wax, retamo wax, sugarcane wax, ouricury wax, lanolin wax, beeswax, lignite wax, paraffin wax, polyethylene wax, propylene wax, polytetrafluoroethylene wax, hydrogenated deodorized soybean oil, metathesis dimer, or a combination thereof.

6. The sound-reducing blend of claim 1, wherein the sound-reducing blend is solid at room temperature.

7. The sound-reducing blend of claim 1, wherein the first wax is at a concentration, by weight, of between 50 percent and 70 percent.

8. The sound-reducing blend of claim 1, wherein the second wax is at a concentration, by weight, of between 30 percent and 50 percent.

9. The sound-reducing blend of claim 1, wherein the first wax has a needle penetration of between 35 dmm and 45 dmm at 25°C.

10. The sound-reducing blend of claim 1, wherein the second wax has a needle penetration of between 10 dmm and 20 dmm at 25°C.

11. A sound-reducing blend, comprising:
a first wax having a first needle penetration; and
a second wax blended with the first wax, the second wax having a second needle penetration;
wherein the first needle penetration differs from the second needle penedtration and the second needle penetration is between 10 dmm and 20 dmm.

12. A sound-reducing blend, comprising:
a first wax; and
a second wax blended with the first wax;
wherein the first wax has a melting point between 82°C and 85°C and the second wax has a melting point between 67°C and 71°C.

13. The sound-reducing blend of claim 12, wherein the first wax is at a concentration, by weight, of 50 percent and the second wax is at a concentration, by weight, of 50 percent.

14. The sound-reducing blend of claim 12, wherein the first wax contains carnauba wax or wherein the first wax has a needle penetration of 2 dmm at 25°C.

15. A sound-reducing tongue and groove member, comprising:
a treatment region within the member; and a sound-reducing blend according to any foregoing claim positioned at a location within the treatment region; wherein the sound-reducing blend being positioned at the location provides sound mitigation.

## Patentansprüche

1. Geräuschdämmende Mischung, die Folgendes umfasst:
ein erstes Wachs, und
ein zweites Wachs, das mit dem ersten Wachs vermischt ist,
wobei das erste Wachs einen Schmelzpunkt von zwischen 53 °C und 56 °C, und das zweite Wachs einen Schmelzpunkt zwischen 67 °C und 71 °C hat.

2. Geräuschdämmende Mischung nach Anspruch 1, wobei das erste Wachs ein weiches und ölhaltiges Wachs enthält.

3. Geräuschdämmende Mischung nach Anspruch 1, wobei das zweite Wachs ein hartes Wachs beinhaltet.

4. Geräuschdämmende Mischung nach Anspruch 1, wobei die geräuschdämmende Mischung eine Lösung, ein Gemisch, eine Suspension, oder eine Kombination von ihnen ist.

5. Geräuschdämmende Mischung nach Anspruch 1, wobei das erste Wachs ein Pflanzenwachs, ein tierisches Wachs, ein epikutikuläres Wachs, ein synthetisches Wachs oder eine Kombination davon ist, oder wobei das erste Wachs ein Pflanzenöl beinhaltet, oder wobei das erste Wachs ein Paraffin beinhaltet, oder wobei das erste Wachs ein biologisch-basiertes Material beinhaltet, oder wobei das erste Wachs Polytetrafluoroethylen beinhaltet, oder wobei das erste Wachs ferner Candelillawachs, Retarnowachs, Zuckerrohrwachs, Ouricurywachs, Lanolinwachs, Bienenwachs, Lignitwachs, Paraffinwachs, Polyethylenwachs, Propylenwachs, Polytetrafluoroethylenwachs, gehärtetes desodiriertes Sojabohnenöl, Metathese-Dimer oder eine Kombination davon enthält.

6. Geräuschdämmende Mischung nach Anspruch 1, wobei die geräuschdämmende Mischung bei Innentemperatur stabil ist.

7. Geräuschdämmende Mischung nach Anspruch 1, wobei das erste Wachs bei einer Konzentration nach Gewicht von zwischen 50 Prozent und 70 Prozent ist.

8. Geräuchdämmende Mischung nach Anspruch 1, wobei das zweite Wachs bei einer Konzentration nach Gewicht von zwischen 30 Prozent und 50 Prozent ist.

9. Geräuschdämmende Mischung nach Anspruch 1, wobei das erste Wachs eine Nadelpenetration von zwischen 35 dmm und 45 dmm bei 25 °C hat.

10. Geräuschdämmende Mischung nach Anspruch 1, wherein das zweite Wachs eine Nadelpenetration von zwischen 10 dmm und 20 dmm bei 25 °C hat.

11. Geräuschdämmende Mischung, die Folgendes umfasst:
ein erstes Wachs, das eine erste Nadelpenetration hat, und
ein zweites Wachs, das mit dem ersten Wachs vermischt ist, und das zweite Wachs eine zweite Nadelpenetration hat,
wobei sich die erste Nadelpenetration von der zweiten Nadelpenetration unterscheidet, und die zweite Nadelpenetration zwischen 10 dmm und 20 dmm ist.

12. Geräuschdämmende Mischung, die Folgendes umfasst:
ein erstes Wachs, und
ein zweites Wachs, das mit dem ersten Wachs gemischt ist,
wobei das erste Wachs einen Schmelzpunkt zwischen 82 °C und 85 °C hat, und das zweite Wachs einen Schmelzpunkt zwischen 67 °C und 71 °C hat.

13. Geräuschdämmende Mischung nach Anspruch 12, wobei das erste Wachs eine Konzentration nach Gewicht von 50 Prozent ist, und das zweite Wachs bei einer Konzentration nach Gewicht von 50 Prozent ist.

14. Geräuschdämmende Mischung nach Anspruch 12, wobei das erste Wachs Karnaubawachs enthält, oder wobei das erste Wachs eine Nadelpenetraton von 2 dmm bei 25 °C hat.

15. Geräuschdämmendes Kreuzversatzelement, das Folgendes umfasst:
einen Behandlungsbereich innerhalb des Elements, und eine geräuschdämmende Mischung gemäß eines vorangehenden Anspruchs, der an einem Ort innerhalb des Behandlungsbreichs positioniert ist, wobei die geräuschdämmende Mischung an dem Ort positioniert wird, der die Geräuschabschwächung bereitstellt.

## Revendications

1. Mélange d'isolement acoustique comprenant:
une première cire; et
une deuxième cire mélangée à la première cire;
**caractérisé en ce que** le point de fusion de la première cire est compris entre 53°C et 56°C et le point de fusion de la deuxième cire est compris entre 67°C et 71°C.

2. Mélange d'isolement acoustique selon la revendication 1, **caractérisé en ce que** la première cire est constituée de cire molle et huileuse.

3. Mélange d'isolement acoustique selon la revendication 1, **caractérisé en ce que** la deuxième cire est constituée de cire dure.

4. Mélange d'isolement acoustique selon la revendication 1, **caractérisé en ce que** le mélange d'isolement acoustique est une solution, une mixture, une suspension, ou bien une combinaison de ces produits.

5. Mélange d'isolement acoustique selon la revendication 1, **caractérisé en ce que** la première cire est une cire végétale, une cire animale, une cire épicuticulaire, une cire synthétique, ou bien une combinaison de ces produits, ou **caractérisé en ce que** la première cire comprend une huile végétale, ou **caractérisé en ce que** la première cire comprend une paraffine, ou **caractérisé en ce que** la première cire comprend une matière à base biologique, ou **caractérisé en ce que** la première cire comprend du polytétrafluoroéthylène, ou **caractérisé en ce que** la première cire comprend par ailleurs une cire de candelilla, une cire de Retamo, une cire de canne à sucre, une cire d'Ouricury, une cire de lanoline, une cire d'abeille, une cire de lignite, une cire de paraffine, une cire de polyéthylène, une cire de propylène, une cire de polytétrafluoroéthylène, une huile de soja hydrogénée et déodorisée, une cire à métathèse, ou bien une combinaison de ces produits.

6. Mélange d'isolement acoustique selon la revendication 1, **caractérisé en ce que** ce mélange est solide à la température ambiante.

7. Mélange d'isolement acoustique selon la revendication 1, **caractérisé en ce que** la concentration en poids de la première cire est comprise entre 50 pour cent et 70 pour cent.

8. Mélange d'isolement acoustique selon la revendication 1, **caractérisé en ce que** la concentration en poids de la deuxième cire est comprise entre 30 pour cent et 50 pour cent

9. Mélange d'isolement acoustique selon la revendication 1, **caractérisé en ce que** la pénétration à l'aiguille de la première cire est comprise entre 35 dmm et 45 dmm à 25°C.

10. Mélange d'isolement acoustique selon la revendication 1, **caractérisé en ce que** la pénétration à l'aiguille de la deuxième cire est comprise entre 10 dmm et 20 dmm à 25°C.

11. Mélange d'isolement acoustique comprenant:
une première cire ayant une première pénétration à l'aiguille; et
une deuxième cire mélangée à la première cire, la deuxième cire ayant une deuxième pénétration à l'aiguille; et
**caractérisé en ce que** la pénétration à l'aiguille de la première cire est différente de la pénétration à l'aiguille de la deuxième cire, et **en ce que** la pénétration à l'aiguille de la deuxième cire est comprise entre 10 dmm et 20 dmm.

12. Mélange d'isolement acoustique comprenant:
une première cire; et
une deuxième cire mélangée à la première cire;
**caractérisé en ce que** le point de fusion de la première cire est compris entre 82°C et 85°C et le point de fusion de la deuxième cire est compris entre 67°C et 71°C.

13. Mélange d'isolement acoustique selon la revendication 12, **caractérisé en ce que** la concentration en poids de la première cire est de 50 pour cent, et **en ce que** la concentration en poids de la deuxième cire est de 50 pour cent.

14. Mélange d'isolement acoustique selon la revendication 12, **caractérisé en ce que** la première cire contient de la cire de carnauba ou bien **en ce que** la pénétration à l'aiguille de la première cire est de 2 dmm à 25°C.

15. Elément d'isolement acoustique à rainure et languette, comprenant:
une zone de traitement dans l'élément et un mélange d'isolement acoustique, selon l'une quelconque des revendications précédentes, qui est placé dans un certain endroit à l'intérieur de la zone de traitement; **caractérisé en ce que** le mélange d'isolement acoustique placé dans cet endroit assure la réduction du bruit.
